# EUROPÄISCHE PATENTSCHRIFT

(11) **EP 2 065 704 B1**
(45) Veröffentlichungstag und Bekanntmachung des Hinweises auf die Patenterteilung: **06.03.2019**
(21) Anmeldenummer: 08405290.1
(22) Anmeldetag: 25.11.2008
(51) Int. Cl.: G01N 30/88

(54) **Gaschromatograph**
Gas chromatograph
Chromatographe en phase gazeuse

(30) Priorität: 30.11.2007 CH 18542007
(43) Veröffentlichungstag der Anmeldung: 03.06.2009
(73) Patentinhaber: Inrag AG, 4127 Birsfelden (CH)
(72) Erfinder: Schneider, Frank, 79618 Rheinfelden (DE)
(74) Vertreter: Bohest AG

(56) Entgegenhaltungen:
- WO-A-2004/065955
- DE-A1- 10 310 313
- JP-A- 2005 180 996
- US-A- 5 711 916
- US-A1- 2004 144 159
- US-B1- 6 306 200
- US-B1- 6 386 014
- SMITH P A ET AL: "Detection of gas-phase chemical warfare agents using field-portable gas chromatography-mass spectrometry systems: instrument and sampling strategy considerations" TRAC, TRENDS IN ANALYTICAL CHEMISTRY, ELSEVIER, AMSTERDAM, NL, Bd. 23, Nr. 4, April 2004 (2004-04), Seiten 296-306, XP004515043 ISSN: 0165-9936

## Beschreibung

Die Erfindung betrifft einen Gaschromatographen mit einem miniaturisierten Chromatographen-Modul gemäss dem Oberbegriff des unabhängigen Anspruchs, wie beispielsweise aus WO 2004/065955 A1 bekannt.

Gaschromatographie ist in Labor und Betrieb ein unentbehrliches analytisches Hilfsmittel, um auch aus komplexen Mischungen rasch und zuverlässig Einzelstoffkonzentrationen zu bestimmen. Gaschromatographische Messungen sind z.B. auch für Anlagenbauer von Interesse, die im Rahmen von Serviceeinsätzen regelmäßig Emissionskontrollen durchführen, um das einwandfreie Funktionieren ihrer Anlagen bzw. der dort installierten selektiven Gassensoren sicher zu stellen. Das ist u.a. bei Rückgewinnungsanlagen für Kohlenwasserstoff-Dampfgemische gängige Praxis. Solche Anlagen sind seit vielen Jahren vorgeschrieben, um etwa die Emission von Benzindämpfen aus Tanklagern oder Abfüllstationen zu vermeiden.

Heute werden in der Regel während des Serviceeinsatzes Proben genommen, dann ins Labor geschickt und dort analysiert. Dann wird oft nach einigen Tagen ein weiterer Einsatz erforderlich, um die Einstellungen der Anlage zu korrigieren.

Der Weg von Proben ins Labor und wieder zurück ist für die Prozessindustrie oft zu lang. Zumal wenn die Ergebnisse direkten Einfluss auf die Ausbeute und die Produktqualität haben. Eine Alternative wäre der Einsatz von mobilen Gaschromatographen. Konventionelle Geräte dieser Art sind jedoch meist unhandlich, schwer und relativ kompliziert zu bedienen.

Durch die vorliegende Erfindung soll ein Gaschromatograph zur Verfügung gestellt werden, der sich für den mobilen Einsatz vor Ort eignet und direkt vor Ort rasch verlässliche Analysedaten liefern kann. Der Gaschromatograph soll dabei insbesondere vielfältig einsetzbar sein und eine einfache Einspeisung von Probengas aus unterschiedlichen Quellen ermöglichen. Er soll ferner als autonomes eigenständiges Gerät konzipiert sein, das ohne externe Ventile, Armaturen etc. und ohne externe Trägergasquelle sowie ohne externen Rechner auskommt. Ferner soll der Gaschromatograph möglichst geringe Totvolumina aufweisen und verhältnismässig leicht und kompakt sein und bequem transportiert werden können.

Die Lösung dieser der Erfindung zugrundeliegenden Aufgabe ergibt sich aus den im kennzeichnenden Teil des unabhängigen Anspruchs beschriebenen Merkmalen. Besonders vorteilhafte Ausgestaltungen und Weiterbildungen des erfindungsgemässen Gaschromatographen sind Gegenstand der abhängigen Ansprüche.

Der Grundgedanke der Erfindung besteht darin, ein in Mikro-Technik implementiertes Chromatographen-Modul zusammen mit modul-externen Leitungen, Ventilen, Druckreduzierventilen, einem Trägergasbehälter und einem Auswertungs- und Steuerungsrechner mit zugehörigem Monitor in einem kleinen und kompakten Gehäuse zu vereinen und möglichst totvolumenfrei so zusammenzuschalten, dass insgesamt ein vollständiger und eigenständiger Gaschromatograph entsteht, in den nur noch das zu analysierende Probengas über einen dafür vorgesehenen Anschluss eingespeist werden muss. Durch die Verwendung von miniaturisierten Komponenten kann der Gaschromatograph sehr kompakt und verhältnismässig leicht gehalten werden.

Im Minimum umfasst der Gaschromatograph dabei neben dem an sich bekannten Chromatographen-Modul und dem integrierten Trägergasbehälter ein Trägergasdruckreduzierventil, ein erstes Probengasdruckreduzierventil, ein elektrisch steuerbares erstes Probengasventil, einen ersten Probengaseinlassanschluss und einen Auslassanschluss für Trägergas und Probengas, wobei der Trägergasbehälter über das Trägergasdruckreduzierventil, der erste Probengaseinlassanschluss über das erste Probengasdruckreduzierventil und das erste Probengasventil und der Auslassanschluss je über den Anschlussblock des Chromatographen-Moduls mit den entsprechenden Zufuhr- und Abfuhr-Kapillaren des Chromatographen-Moduls verbunden sind. Durch den Einsatz von geräte-internen Druckreduzierventilen für Trägergas und Probengas wird ein konstanter Durchfluss von Probengas und Trägergas durch das Chromatographen-Modul erreicht, so dass der Gaschromatograph weitestgehend unabhängig vom Betriebsdruck des Trägergasbehälters und vom Druck des zugeführten Probengases und sich der Anwender nicht darum kümmern muss, wodurch sich wiederum die Bedienung des Gaschromatographen entsprechend vereinfacht.

Gemäss einer bevorzugten Ausführungsform ist das erste Probengasventil als Zweiwegmagnetventil mit einem Einlass und zwei Auslässen ausgebildet, wobei der Einlass an das erste Probengasdruckreduzierventil angeschlossen ist und ein Auslass über den Anschlussblock mit der Probengaszufuhrkapillare des Chromatographen-Moduls und der andere Auslass mit dem Auslassanschluss für Träger- und Probengas verbunden ist, und wobei das erste Probengasventil vom Rechner ansteuerbar ist. In der einen Ventilstellung wird dabei Probengas im Bypass direkt zum Auslassanschluss geleitet, in der anderen Ventilstellung wird das Probengas in das Chromatographen-Modul eingespeist. Dadurch steht ständig frisches, unverfälschtes Probengas für die Analyse zur Verfügung.

Gemäss einer weiteren vorteilhaften Ausbildung ist zwischen dem ersten Probengaseinlassanschluss und dem ersten Probengasdruckreduzierventil zusätzlich eine vom Rechner gesteuerte Probengaspumpe vorgesehen, deren Saugseite mit dem ersten Probengaseinlassanschluss verbunden ist. Durch diese Ausgestaltung kann die Einspeisung von Probengas selbst ansaugend betrieben werden. In Kombination mit dem Probengasdruckreduzierventil ist die Einspeisung von Probengas weitestgehend unabhängig vom Betriebsdruck desselben möglich und es können unterschiedlichste Probengasgefäße, vom Folienbeutel oder der Gasmaus bis hin zu Druckbehältern mit maximal 20 bar Überdruck an den Gaschromatographen direkt angeschlossen werden.

Gemäss einer weiteren vorteilhaften Ausbildung der Erfindung ist ein zweiter Probengasanschluss mit einem zweiten Probengasdruckreduzierventil und einem zweiten, ebenfalls als Zweiwegmagnetventil ausgebildeten Probengasventil vorgesehen. Dadurch ist es möglich, zwei Probengasströme gleichzeitig anzuschliessen, wodurch sich die Einsatzflexibilität des Chromatographen weiter erhöht. Mittels der beiden Probengasventile können die beiden Probengasströme selektiv in das Chromatographen-Modul eingespeist werden.

Der Trägergasbehälter ist vorzugsweise für relativ niedrige Drücke (typisch 10-12 bar) ausgelegt und hat ein relativ geringes Fassungsvermögen (typisch 100 ml). Aufgrund des relativ niedrigen Innendrucks des Trägergasbehälters und seines geringen Fassungsvermögens lässt sich der Chromatograph problem- und gefahrlos transportieren und berücksichtigt auch die Sicherheitsbestimmungen des internationalen Luftverkehrs. Das Chromatographen-Modul hat bei Ausstattung mit einer Dünnschichttrennsäule einen typischen Trägergasverbrauch von weniger als 100pl/min. Damit reicht ein Liter Helium-Trägergas für rund eine Woche Dauerbetrieb.

Für manche Einsatzfälle, z.B. für autonome Langzeitmessungen über Wochen und Monate, ist es jedoch zweckmässig oder erforderlich, eine externe Trägergasquelle grösserer Kapazität und höheren Betriebsdrucks (typischerweise 160 bar Hochdruck-Stahlflaschen) zu verwenden. Gemäss einer vorteilhaften Weiterbildung der Erfindung ist der Gaschromatograph dafür mit einem Trägergaseinlassanschluss versehen, der über ein Rückschlagventil mit dem Trägergasdruckreduzierventil eingangsseitig verbunden ist, wobei der interne Trägergasbehälter ebenfalls über ein Rückschlagventil mit dem Trägergasdruckreduzierventil verbunden ist. Aufgrund der Rückschlagventile kann bei Bedarf einfach und ohne Umrüstung eine externe Trägergasquelle an den Gaschromatographen angeschlossen werden und dieser wahlweise mit der internen Trägergasversorgung oder mit extern zugeführtem Trägergas betrieben werden.

Zur Realisierung möglichst geringer Totvolumina in den Probengas führenden Bauteilen ist gemäss der Erfindung ein dichtend lösbar mit dem Anschlussblock des Chromatographen-Moduls verbundenes Manifold vorgesehen, über welches alle zum Chromatographen-Modul hin und von diesem weg führenden modul-externen Leitungen an das Chromatographen-Modul angeschlossen sind, wobei das erste Probengasventil innerhalb des Manifolds angeordnet ist. Besonders vorteilhaft sind dabei beide Probengasventile, d.h. das erste und das zweite Probengasventil, innerhalb des Manifolds angeordnet und auch selbst miniaturisiert und möglichst totvolumenfrei ausgebildet. Das Manifold bildet eine Schnittstelle zum Chromatographen-Modul und kann verhältnismässig einfach an wechselnde Bedürfnisse (z.B. unterschiedliche Anzahlen von Probengaszufuhrleitungen) angepasst werden. Das Manifold ist vorzugsweise auch Mikrofilter in den zum Chromatographen-Modul führenden Leitungen auf, um eine Verunreinigung desselben zu vermeiden.

Für die Gasanalyse im GC-Modul werden (je nach Trennsäulentyp) lediglich 0,5 bis 10µl Probegas benötigt, aber das Volumen in den internen und den externen Zuleitungen mit Armaturen zur Gasaufbereitung kann üblicherweise bis zu mehreren ml betragen. Dies hat zur Folge, dass das Probegas verfälscht wird und entsprechend lange benötigt, bis es zu der Trennsäule gelangt. Durch das Manifold mit den darin integrierten Zweiweg-Probengas-Mikromagnetventilen wird dieses Problem vermieden und das Probengas auf kürzestem Wege zum Chromatographen-Modul geführt. Durch die Bypassfunktion kann das Probengas milliliterweise abgeführt werden und beschleunigt somit den Spülprozess durch die Zuführleitung und die daran angeschlossenen Armaturen. Das heisst, dass ein rascher Austausch des Probengases innerhalb weniger Sekunden (2-5) erfolgen kann, so dass nachfolgende Messungen ohne grösseren Störeinfluss durch die jeweils vorhergehende Messung bleiben.

Gemäss einer besonders vorteilhaften Weiterbildung der Erfindung ist im Gehäuse eine vom Rechner gesteuerte Kühleinrichtung für die Trennsäule des Chromatographen-Moduls vorgesehen. Die Kühleinrichtung weist dabei vorzugsweise ein im Wesentlichen geschlossenes Kühlgehäuse auf, welches die Trennsäule des Chromatographen-Moduls übergreift und in welchem Luftzirkulationsmittel und ein vom Rechner gesteuertes Peltier-Element angeordnet sind, wobei ferner ausserhalb des Kühlgehäuses Wärmeabfuhrmittel für das Peltier-Element vorgesehen sind. Die Trennsäule des Chromatographen-Moduls kann mittels deren Heizung relativ schnell (typisch 8°C pro Minute) auf die gewünschte Temperatur aufgeheizt werden (typisch bis zu etwa 300°C). Mittels der Kühleinrichtung kann die Trennsäule auch relativ schnell (typisch innerhalb von 20 Sekunden) wieder abgekühlt werden, so dass sehr kurze Analysezyklen von typisch unter 1 Minute erreicht werden können. Neben kurzen Abkühlzeiten erlaubt die Kühleinrichtung aber auch die zuverlässige und rasche Einstellung von stabilen Starttemperaturen ab ca. 20 °C für die Trennsäule selbst bei höheren Umgebungstemperaturen von bis zu 45 °C.

Der Monitor des Rechners ist vorzugsweise berührungssensitiv ausgebildet, wobei der Rechner dazu programmiert ist, auf dem Monitor Schaltflächen darzustellen, durch deren Antippen programmierte Funktionen ausgelöst werden können. Diese erlaubt eine einfache Bedienung des Chromatographen in rauhen Umgebungen. Vorteilhaft kann zusätzlich auch eine Schnittstelle zum Anschluss eines oder mehrerer externer Eingabegeräte (Tastatur, Maus) vorgesehen sein, was für manche Benutzer angenehmer sein kann.

Der Chromatograph ist vorteilhaft sowohl mit einer Akkumulator-Stromversorgungsquelle als auch mit einem Netzteil zum Anschluss an eine externe Wechselspannungsquelle (Wechselstromnetz 110-220 Volt) oder Niedervolt-Gleichspannungsquelle (z.B. 12-24 Volt) versehen, wobei letztere aufgrund des geringen Stromverbrauchs auch eine Solarstromquelle sein kann. Dadurch ist der Chromatograph universell einsetzbar und der Anwender hat damit ein Maximum an Flexibilität bezüglich der Energieversorgung.

Weitere Details und vorteilhafte Ausgestaltung ergeben sich aus der nachstehenden Beschreibung eines Ausführungsbeispiels anhand der Zeichnung. Es zeigen:
- Fig. 1: eine Gesamtansicht des erfindungsgemässen Gaschromatographen bei abgenommenem Schutzdeckel,
- Fig. 2: eine blockschematische Darstellung aller funktionswesentlichen Komponenten des Gaschromatographen,
- Fig. 3: das Chromatographen-Modul, das Manifold und die Kühleinrichtung des Gaschromatographen,
- Fig. 4: eine schematische Skizze zur Erläuterung des Innenaufbaus der Kühleinrichtung und der Strömungsverhältnisse in derselben,
- Fig. 5: eine expandierte Ansicht des Anschlussblocks des Chromatographen-Moduls und des Manifolds,
- Fig. 6: einen Schnitt nach der Linie VI-VI der Fig. 3 in vergrösserter Darstellung,
- Fig. 7-8: zwei Schrägansichten des Manifolds ohne eingesetzte Magnetventile und
- Fig. 9-10: zwei schematische Skizzen zur Erläuterung des prinzipiellen Aufbaus und der Funktionsweise der im Manifold eingesetzten Mikro-Magnetventile.

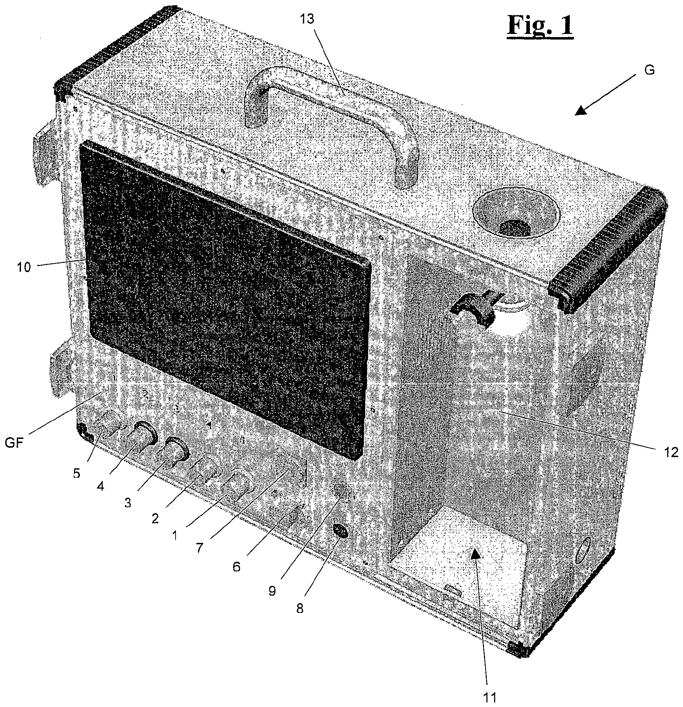

Wie die Gesamtdarstellung der Fig. 1 zeigt, umfasst der erfindungsgemässe Gaschromatograph ein relativ kleines und handliches Gehäuse G, in bzw. an dem alle Funktionskomponenten untergebracht sind. Das Gehäuse ist vorzugsweise kofferartig ausgebildet, kann aber auch in einem Tragkoffer passender Dimensionen platziert werden. Zum Schutz der an seiner Frontseite angeordneten Elemente ist vorzugsweise eine Schutzabdeckung vorgesehen, welche jedoch in der Fig. 1 nicht dargestellt ist.

An der Frontseite GF des Gehäuses sind ein erster und ein zweiter Probengaszufuhranschluss 1 und 2, ein nicht benutzter Reserve-Rohrleitungsanschluss 3, ein Trägergas- und Probengasauslassanschluss 4, ein Trägergaszufuhranschluss 5, ein Hauptschalter 6, ein USB- oder ähnlicher Schnittstellenanschluss 7 für ein externes Eingabegerät, z.B. eine Tastatur, diverse Signallampen 8-9 und ein Monitor (Bildschirm) 10 angeordnet. In einem seitlichen Fach 11, das normalerweise durch eine hier nicht gezeigte Abdeckung verschlossen ist, befindet sich ein relativ kleiner Vorratsbehälter 12 für Trägergas. Der Trägergasbehälter fasst vorzugsweise ca. 100 ml und ist für Drücke im Bereich von 10-12 bar ausgelegt. Er ist vorzugsweise mit einem internen Auslassventil ausgestattet, durch welches hindurch er auch wieder befüllt werden kann. Zum bequemen Transport des Chromatographen ist an der Oberseite des Gehäuses ein Traggriff 13 befestigt.

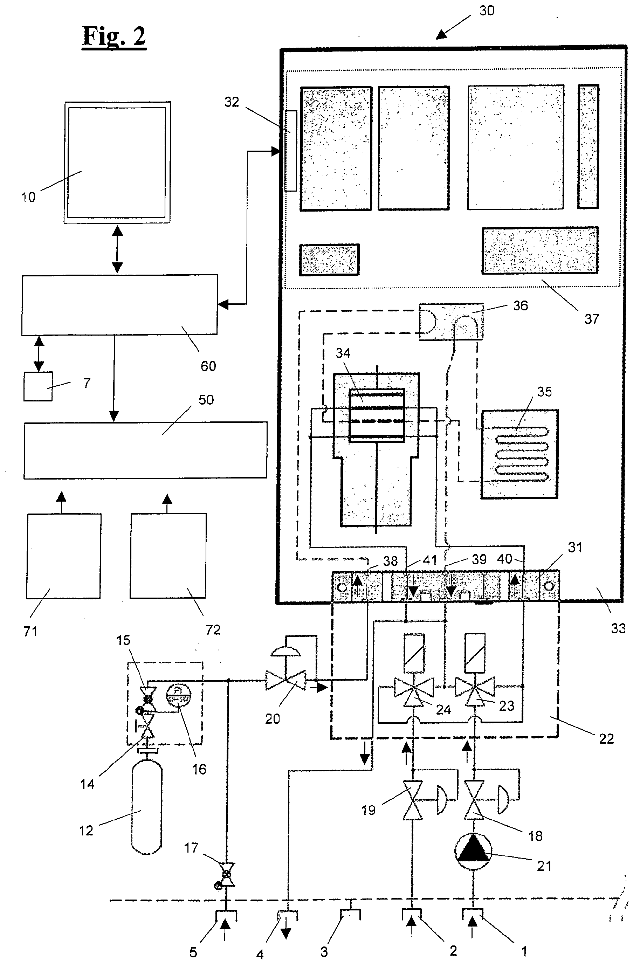

Die im Inneren des durch eine Zwischenwand in zwei Fächer oder Kammern unterteilten Gehäuses G befindlichen Funktionskomponenten sind in der Fig. 2 blockschematisch dargestellt. Es sind dies ein Chromatographen-Modul 30 mit einem Gas-Anschlussblock 31, der schon erwähnte Trägergasbehälter 12 mit einer Kombinationsarmatur, die ein Absperrventil 14, ein Rückschlagventil 15 und ein Manometer 16 umfasst, ein weiteres Rückschlagventil 17, ein erstes und ein zweites Präzisions-Druckreduzierventil 18 bzw. 19 für Probengas, ein weiteres Präzisions-Druckreduzierventil 20 für Trägergas, eine Probengaspumpe 21, ein Manifold 22, das dichtend mit dem Anschlussblock 31 verschraubt ist, und diverse, nicht näher bezeichnete Gasleitungen, die die genannten Komponenten untereinander verbinden. Im Inneren des Manifolds 22 befinden sich ein erstes und ein zweites Probengasventil 23 bzw. 24 sowie diverse Leitungskanäle, worauf weiter unten noch zurückgekommen wird. Ferner sind im Gehäuse eine Kühleinrichtung 50 für das Chromatographen-Modul 30 bzw. dessen Trennsäule, ein mit dem Chromatographen-Modul 30 über eine Kommunikationsschnittstelle 32 desselben kommunizierender Rechner 60, die schon erwähnte Schnittstelle 7 für den Anschluss eines externen Eingabegeräts, der ebenfalls schon erwähnte Monitor 10 und eine aus einem Akkumulatoren-Pack 71 und einem Netzteil 72 bestehende Stromversorgungseinheit vorgesehen. Das Netzteil kann für den Anschluss an das Wechselstromnetz (110/220 Volt) oder für den Anschluss an eine Niederspannungsgleichstromquelle (z.B. 12 oder 24 Volt) ausgelegt sein, wobei als Niederspannungsgleichstromquelle auch ein Solarmodul eingesetzt werden kann.

Das zentrale Bauelement des erfindungsgemässen Gaschromatographen ist das extrem miniaturisierte Chromatographen-Modul 30. Dieses ist auf einer einzigen Trägerplatte 33 aufgebaut, auf der alle Kernkomponenten eines Gaschromatographen enthalten sind. Es sind dies ein elektrisch gesteuerter Injektor 34, eine mit einer Heizung versehene Dünnschicht- oder gepackte Trennsäule 35 und ein ggf. auch beheizbarer Wärmeleitfähigkeitsdetektor 36 sowie eine Mikroprozessor-Elektronik 37 zur Steuerung des Moduls sowie zur Auswertung, Speicherung und Übermittlung der Messdaten über die Kommunikationsschnittstelle 32. Ferner sind auf der Trägerplatte 33 diverse Kapillaren vorgesehen, welche einerseits den Injektor, die Trennsäule und den Detektor verbinden und anderseits zum Anschlussblock 31 führen. Die in den Anschlussblock 31 eingesetzten vier Endabschnitte der Kapillaren sind im Folgenden als Trägergaszufuhrkapillare 38, Trägergasabfuhrkapillare 39, Probengaszufuhrkapillare 40 und Probengasabfuhrkapillare 41 bezeichnet. Alle zentralen Betriebsfunktionen des Chromatographen-Moduls selbst werden von der Mikroprozessor-Elektronik 37 autonom gesteuert, wobei übergeordnete Steuerbefehle vom Rechner 60 übernommen und abgearbeitet werden können. Die Mikroprozessor-Elektronik 37 ist auch mit Schalt-Ausgängen zur Ansteuerung von modul-externen Komponenten wie z.B. Ventilen und Pumpen ausgestattet.

Das Chromatographen-Modul 30 ist kommerziell erhältlich und wird z.B. unter der Bezeichnung Mikro-GC-Modul GCM 5000 von der Firma SLS Micro Technology GmbH, Hamburg, Deutschland vertrieben. Es ist z.B. im Dokument EP 1 588 156 B1 in allen Details beschrieben, so dass der Fachmann diesbezüglich keiner näheren Erläuterung bedarf. Die folgenden Ausführungen beschränken sich daher auf die genannten übrigen Komponenten des erfindungsgemässen Gaschromatographen.

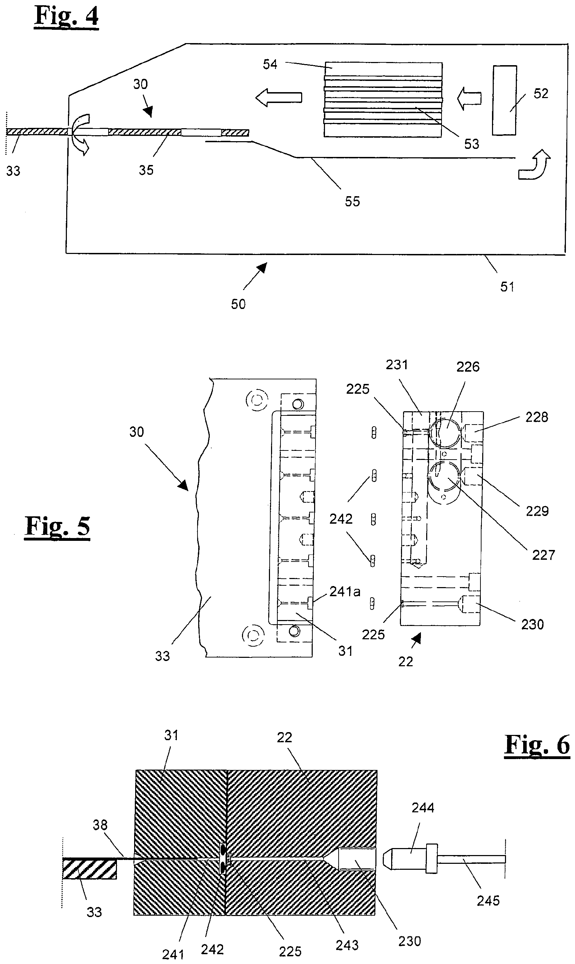

Wie schon weiter vorne erläutert, ist es von besonderer Wichtigkeit, dass wenigstens die Probengas führenden Teile der Anordnung möglichst totvolumenfrei konzipiert sind. Dies wird durch das speziell ausgebildete Manifold 22 erreicht, über welches alle Gas führenden Leitungen an den Anschlussblock 31 des Chromatographen-Moduls 30 angeschlossen sind. Besonders vorteilhaft und wichtig ist dabei, dass die beiden Probengas-Ventile 23 und 24 einerseits selbst möglichst totvolumenfrei ausgebildet und anderseits in das Manifold 22 integriert sind, so dass sie sich praktisch unmittelbar am Anschlussblock 31 befinden. Die Figuren 5-10 zeigen den Aufbau des Manifolds 22 im Detail.

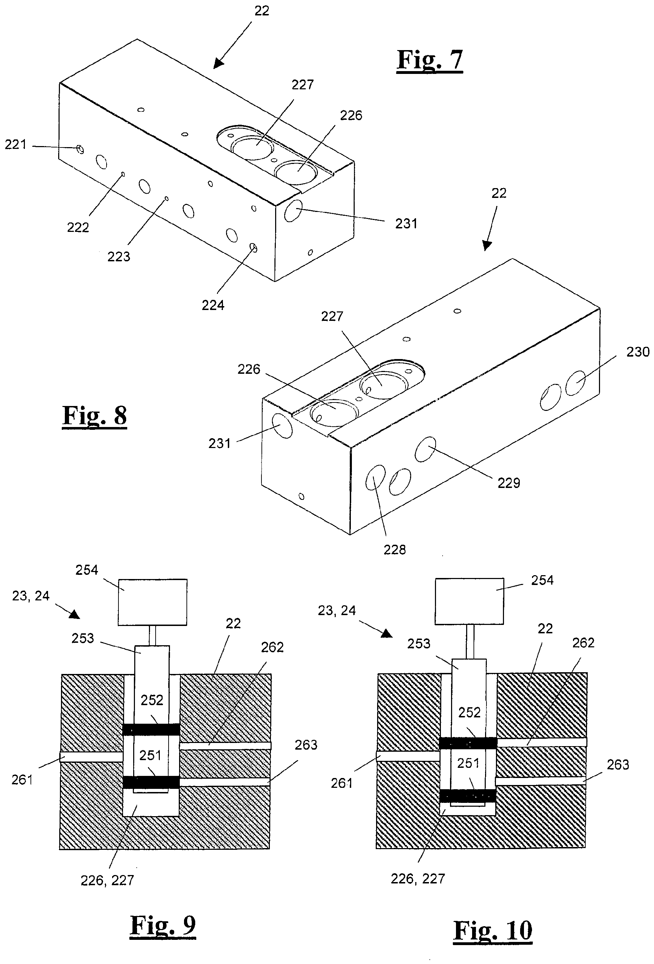

Das Manifold 22 ist im Wesentlichen ein quadrischer Block mit diversen Leitungskanälen, die teilweise im Inneren verlaufen und teilweise nach aussen ausmünden. An der dem Anschlussblock 31 zugewandten Seite befinden sich vier Leitungskanalmündungen, die, wenn das Manifold am Anschlussblock 31 montiert ist, mit dort vorgesehenen Öffnungen fluchten. Die vier Leitungskanalmündungen sind ein Trägergasauslass 221, ein Probengaseinlass 222, ein Trägergaseinlass 223 und ein Probengasauslass 224 (Fig. 7). Im Trägergasauslass 221 und im Probengasauslass 224 ist je ein Mikrofilter 225 eingesetzt (Fig. 5 und 6). An der Oberseite des Manifolds 22 befinden sich zwei Bohrungen 226 und 227 zur Aufnahme der beiden Probengas-Ventile 23 und 24. Die Figuren 9 und 10 zeigen die Ventile in eingesetztem Zustand. An der dem Anschlussblock 31 abgewandten Seite des Manifolds 22 befinden sich drei Leitungskanalmündungen und an einer Stirnseite eine vierte Leitungskanalmündung. Diese vier Leitungskanalmündungen sind ein erster und ein zweiter Probengaszufuhreinlass 228 und 229, ein Trägergaszufuhreinlass 230 und ein Probengas- und Trägergasabfuhrauslass 231. Die vier Leitungskanalmündungen 228-231 sind durch Gewindebohrungen erweitert und dienen zur Aufnahme von Leitungsanschlussnippeln, wie dies in Fig. 6 etwas schematisiert dargestellt ist. An diese vier Leitungskanalmündungen 228-231 sind über nicht bezeichnete Rohrleitungen das erste und das zweite Probengasdruckreduzierventil 18 bzw. 19, das Trägergasdruckreduzierventil 20 und der Proben- und Trägergasauslassanschluss 4 an der Gehäusefrontplatte angeschlossen (Fig. 2).

Die vier Leitungskanalmündungen 221-224 sind über im Inneren des Manifolds 22 verlaufende Leitungskanäle und teilweise unter Einbezug der beiden Probengasventile 23 und 24 so mit den vier Leitungskanalmündungen 228-231 verbunden, dass sich das aus Fig. 2 ersichtliche Verbindungsschema ergibt. Die in den Figuren 7-8 nicht bezeichneten Bohrungen sind entweder verschlossene Hilfsbohrungen für die Realisierung der im Inneren verlaufenden Leitungskanäle oder Durchgangsbohrungen zur Aufnahme von Verbindungsschrauben.

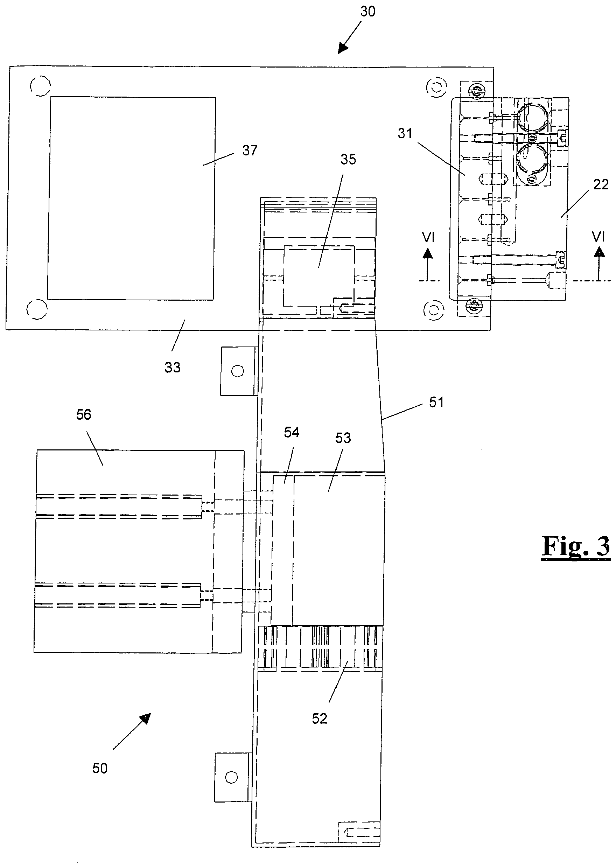

Die Fig. 3 zeigt das Manifold 22 im mit dem Anschlussblock 31 verschraubten Zustand. Die Schnittdarstellung der Fig. 6 verdeutlicht den Aufbau des Manifolds 22 und des Anschlussblocks 31.

Der Anschlussblock 31 besitzt vier durchgehende Bohrungen, in die je einer der vier Kapillarenendabschnitte 38-41 (Fig. 2) dicht eingesetzt ist. In Fig. 6 ist nur eine Bohrung 241 und der Kapillarenendabschnitt 38 dargestellt. Die offene Ausmündung 241a (Fig. 5) der Bohrung 241 ist erweitert und nimmt einen O-Ring 242 auf. Im Manifold 22 befindet sich ein Leitungskanal in Form einer durchgehenden Bohrung 243 mit einer erweiterten Gewindebohrung, die den genannten Trägergaszufuhreinlass 230 darstellt und einen Rohrleitungsanschlussnippel 244 aufnehmen kann, der auf einer vom Trägergasdruckreduzierventil 20 kommenden Leitung 245 sitzt. Im Bereich der anderen Ausmündung der Bohrung 243 ist eines der schon erwähnten Mikrofilter 225 angeordnet (Fig. 5), welches eine Verunreinigung des Chromatographen-Moduls verhindert. Manifold 22 und Anschlussblock 31 sind mit einander verschraubt und mittels der genannten O-Ringe 242 gegenseitig abgedichtet.

Die Figuren 9 und 10 zeigen schematisch eine prinzipielle Realisierungsmöglichkeit für die im Manifold 22 integrierten Probengasventile 23 und 24. Die beiden Ventile sitzen in den genannten Bohrungen 226 und 227 des Manifolds. Jedes Ventil besitzt einen mit zwei O-Ringen 251 und 252 versehenen Kolben 253, der mittels eines Hubmagneten 254 in der Bohrung 226 bzw. 227 zwischen zwei Stellungen hin und her bewegt werden kann. Dabei wird ein Einlasskanal 261 in der einen Stellung (Fig. 9) mit einem ersten Auslasskanal 262 und in der anderen Endstellung (Fig. 10) mit einem zweiten Auslasskanal 263 verbunden, so dass sich also insgesamt ein Zweiwegeventil ergibt. Selbstverständlich kann die Konstruktion der Ventile auch abgewandelt sein.

Gemäss einem weiteren wichtigen Aspekt der Erfindung ist der Gaschromatograph vorzugsweise auch mit einer Kühleinrichtung 50 für die Trennsäule 35 des Chromatographen-Moduls 30 versehen. Diese in den Figuren 3 und 4 dargestellte Kühleinrichtung umfasst ein ein im Wesentlichen geschlossenes Kühlgehäuse 51 aufweist, welches die Trennsäule 35 übergreift. Im Kühlgehäuse 51 sind Luftzirkulationsmittel in Form eines Ventilators 52 und ein mit einem Kühlkörper 53 versehenes Peltier-Element 54 sowie ein Strömungsleitblech 55 angeordnet. Ausserhalb des Kühlgehäuses sind in Form eines weiteren Kühlkörpers 56 Wärmeabfuhrmittel für das Peltier-Element 54 vorgesehen. Das Peltier-Element 54 wird vom Rechner 60 angesteuert.

Die grundlegenden Betriebsfunktionen des Chromatographen-Moduls 30 werden von der auf ihm enthaltenen Mikroprozessor-Elektronik 37 gesteuert. Der Rechner 60 dient im Wesentlichen zur übergeordneten Steuerung und als Schnittstelle zum Benutzer. Unter übergeordneter Steuerung werden dabei z.B. die Auswahl der Probengaseingänge, die Einstellung und Auswahl bestimmter Messzyklen, Einstellung und Auswahl von Temperaturverläufen während der Messungen, Verwendung der Probengaspumpe, Nachlaufzeiten, Verzögerungszeiten, Parametrisierung und Kalibrierung, Zeitsteuerung etc. verstanden. Alle diese Steuerungsmöglichkeiten erfolgen menügeführt über den Monitor 10, der vorzugsweise als sogenannter Touch Screen ausgebildet ist. Der Rechner 60 ist natürlich entsprechend programmiert. Der Rechner 60 kann auch dazu ausgebildet sein, die vom Chromatographen-Modul gelieferten Messwerte auszuwerten, darzustellen und ev. auch zu speichern oder über eine standardisierte Schnittstelle auszugeben.

Der erfindungsgemässe Gaschromatograph ist deutlich kompakter und auch robuster als herkömmliche, miniaturisierte Systeme. Aufgrund des modularen Konzepts erfordert es nur geringen Serviceaufwand. Es ist einfach zu bedienen und kann somit vom Anwender als "black box" betrachtet werden. Integrierte Mikroprozessortechnik ermöglicht zusammen mit einer angepassten Steuer-Software die Parametrierung, Kalibrierung, Datenauswertung und Datenausgabe über Standard-Schnittstellen. So lassen sich auch Selbstdiagnose-, automatische Rekalibrierungs- und Selbstvalidierungsfunktionen realisieren.

Einschließlich Energie- und Trägergasversorgung passt der gesamte Chromatograph mit den Abmessungen 42 x 32 cm bei einer Tiefe von 21 cm in einen Aktenkoffer und wiegt betriebsbereit inklusive Zubehör nur knapp elf Kilogramm.

Das Gehäuse des erfindungsgemässen Chromatographen kann auch zum Einbau in Analysenschränke oder -container ausgebildet sein. Als Instrument der Prozessanalysentechnik kann der Chromatograph dann kontinuierlich Messwerte direkt aus dem Prozess liefern und erschließt auch dort vielfältige Potenziale zur Effizienzsteigerung der Produktion - höhere Ausbeute, bessere Produktqualität, mehr Anlagensicherheit und weniger Emissionen. Durch den Einsatz entsprechend angepasster Chromatographen-Module können zudem neue At-Line- und Online-Gaschromatographie-Anwendungen realisiert werden, etwa in der Emissionsüberwachung industrieller Produktions-, Lager- und Abfüllanlagen, aber auch zur Gasanalyse in der Fermentationstechnik. Gerade der autonome Betrieb in Verbindung mit einer Versorgung über Solarenergie macht den erfindungsgemässen Gaschromatographen besonders attraktiv für den dezentralen Einsatz, etwa zur Überwachung von unterirdischen Gaslagern.

## Patentansprüche

1. Gaschromatograph mit einem miniaturisierten Chromatographen-Modul (30), welches in einem vorzugsweise tragbar ausgebildeten Gehäuse (G) angeordnet ist und welches eine Trägerplatte (33) und auf dieser angeordnet einen Injektor (34), eine mit einer Heizung versehene Trennsäule (35) und einen Detektor (36) sowie diverse Kapillaren (38-41) zur Verbindung dieser Funktionsteile und zur Zu- und Abfuhr von Trägergas und Probengas aufweist, wobei an der Trägerplatte (33) ein Anschlussblock (31) zum Anschliessen von modul-externen Träger- und Probengaszu- und - abfuhrleitungen an die Kapillaren (38-41) vorgesehen ist, und wobei sich auf der Trägerplatte (33) ferner eine mikroprozessor-basierte elektronische Schaltung (37) zur Steuerung des Injektors (34) und der Heizung der Trennsäule (35), zur Aufbereitung und ggf. Auswertung der vom Detektor (36) erzeugten Messsignale und zur Kommunikation mit einem modul-externen Rechner (60) befindet, **dadurch gekennzeichnet, dass** in dem Gehäuse (G) zusätzlich ein Trägergasbehälter (12), ein Trägergasdruckreduzierventil (20), ein erstes Probengasdruckreduzierventil (18), ein elektrisch steuerbares erstes Probengasventil (23), ein erster Probengaseinlassanschluss (1) und ein Auslassanschluss (4) für Trägergas und Probengas sowie ein Rechner (60) mit einem Monitor (10) angeordnet sind, wobei der Trägergasbehälter (12) über das Trägergasdruckreduzierventil (20), der erste Probengaseinlassanschluss (1) über das erste Probengasdruckreduzierventil (18) und das erste Probengasventil (23) und der Auslassanschluss (4) je über den Anschlussblock (31) mit den entsprechenden Zufuhr- und Abfuhr-Kapillaren (38-41) des Chromatographen-Moduls (30) verbunden sind und wobei ein dichtend lösbar mit dem Anschlussblock (31) des Chromatographen-Moduls (30) verbundenes Manifold (22) vorgesehen ist, über welches alle zum Chromatographen-Modul (30) hin und von diesem weg führenden modul-externen Leitungen an das Chromatographen-Modul angeschlossen sind, und wobei das erste Probengasventil (23) innerhalb des Manifolds (22) angeordnet ist, und wobei ferner der Rechner (60) zur Kommunikation mit dem Chromatographen-Modul (30) und zur Steuerung desselben sowie zur Auswertung und Anzeige und ggf. Speicherung der vom Chromatographen-Modul (30) erzeugten Messwerte ausgebildet ist.

2. Gaschromatograph nach Anspruch 1, **dadurch gekennzeichnet, dass** das erste Probengasventil (23) als Zweiwegmagnetventil mit einem Einlass und zwei Auslässen ausgebildet ist, wobei der Einlass an das erste Probengasdruckreduzierventil (18) angeschlossen ist und ein Auslass über den Anschlussblock (31) mit der Probengaszufuhrkapillare (40) des Chromatographen-Moduls (30) und der andere Auslass mit dem Auslassanschluss (4) für Träger- und Probengas verbunden ist, und wobei das erste Probengasventil (23) vom Rechner (60) ansteuerbar ist.

3. Gaschromatograph nach einem der vorangehenden Ansprüche, **dadurch gekennzeichnet, dass** zwischen dem ersten Probengaseinlassanschluss (1) und dem ersten Probengasdruckreduzierventil (18) eine vom Rechner (60) gesteuerte Probengaspumpe (21) vorgesehen ist, deren Saugseite mit dem ersten Probengaseinlassanschluss (1) verbunden ist.

4. Gaschromatograph nach einem der vorangehenden Ansprüche, **dadurch gekennzeichnet, dass** im Gehäuse (G) ein zweites Probengasventil (24), ein zweites Probengasdruckreduzierventil (19) und ein zweiter Probengaseinlassanschluss (2) vorgesehen sind, wobei das zweite Probengasventil (24) einlassseitig über das zweite Probengasdruckreduzierventil (19) mit dem zweiten Probengaseinlassanschluss (2) und auslassseitig über den Anschlussblock (31) mit der Probengaszufuhrkapillare (40) des Chromatographen-Moduls (30) verbunden ist.

5. Gaschromatograph nach Anspruch 4, **dadurch gekennzeichnet, dass** das zweite Probengasventil (24) als Zweiwegmagnetventil mit einem Einlass und zwei Auslässen ausgebildet ist, wobei der Einlass an das zweite Probengasdruckreduzierventil (19) angeschlossen ist und ein Auslass über den Anschlussblock (31) mit der Probengaszufuhrkapillare (40) des Chromatographen-Moduls (30) und der andere Auslass mit dem Auslassanschluss (4) für Träger- und Probengas verbunden ist, und wobei das zweite Probengasventil (24) vom Rechner (60) ansteuerbar ist.

6. Gaschromatograph nach Anspruch 4 oder 5, **dadurch gekennzeichnet, dass** das zweite Probengasventil (24) innerhalb des Manifolds (22) angeordnet ist.

7. Gaschromatograph nach einem der vorangehenden Ansprüche, **dadurch gekennzeichnet, dass** das Manifold (22) gegen den Anschlussblock (31) mittels O-Ringen (242) abgedichtet ist.

8. Gaschromatograph nach einem der vorangehenden Ansprüche, **dadurch gekennzeichnet, dass** im Manifold (22) Mikrofilter (225) in den zum Chromatographen-Modul (30) führenden Leitungen angeordnet sind.

9. Gaschromatograph nach einem der vorangehenden Ansprüche, **dadurch gekennzeichnet, dass** im Gehäuse (G) ein Trägergaseinlassanschluss (5) vorgesehen und über ein Rückschlagventil (17) mit dem Trägergasdruckreduzierventil (20) eingangsseitig verbunden ist, und dass der Trägergasbehälter (12) ebenfalls über ein Rückschlagventil (15) mit dem Trägergasdruckreduzierventil (20) verbunden ist.

10. Gaschromatograph nach einem der vorangehenden Ansprüche, **dadurch gekennzeichnet, dass** der Trägergasbehälter (12) mit einem Absperrventil (14) und einem Manometer (16) versehen ist.

11. Gaschromatograph nach einem der vorangehenden Ansprüche, **dadurch gekennzeichnet, dass** der Trägergasbehälter (12) im vollen Zustand einen relativ niedrigen Innendruck von ca. 10-12 bar aufweist.

12. Gaschromatograph nach einem der vorangehenden Ansprüche, **dadurch gekennzeichnet, dass** der Trägergasbehälter (12) ein Volumen von maximal etwa 100 ml aufweist.

13. Gaschromatograph nach einem der vorangehenden Ansprüche, **dadurch gekennzeichnet, dass** der Trägergasbehälter (12) wiederbefüllbar ausgebildet ist.

14. Gaschromatograph nach einem der vorangehenden Ansprüche, **dadurch gekennzeichnet, dass** im Gehäuse (G) eine vom Rechner (60) gesteuerte Kühleinrichtung (50) für die Trennsäule (35) des Chromatographen-Moduls (30) vorgesehen ist.

15. Gaschromatograph nach Anspruch 14, **dadurch gekennzeichnet, dass** die Kühleinrichtung (50) ein im Wesentlichen geschlossenes Kühlgehäuse (51) aufweist, welches die Trennsäule (35) übergreift und in welchem Luftzirkulationsmittel (52) und ein vom Rechner (60) gesteuertes Peltier-Element (54) angeordnet sind, und wobei ferner ausserhalb des Kühlgehäuses (51) Wärmeabfuhrmittel (56) für das Peltier-Element vorgesehen sind.

16. Gaschromatograph nach einem der vorangehenden Ansprüche, **dadurch gekennzeichnet, dass** der Monitor (10) des Rechners (60) berührungssensitiv ausgebildet ist, wobei der Rechner dazu ausgebildet ist, auf dem Monitor Schaltflächen darzustellen, durch deren Antippen programmierte Funktionen ausgelöst werden können.

17. Gaschromatograph nach einem der vorangehenden Ansprüche, **dadurch gekennzeichnet, dass** das Gehäuse (G) mit einer Schnittstelle (7) zum Anschluss einer Tastatur und/oder eines anderen Eingabegeräts für den Rechner (60) ausgestattet ist.

18. Gaschromatograph nach einem der vorangehenden Ansprüche, **dadurch gekennzeichnet, dass** im Gehäuse (G) eine Stromversorgung (71,72) vorgesehen ist, welche Akkumulatoren und ein Netzteil zum Anschluss an das Wechselstromnetz oder an eine Niederspannungsgleichstromquelle umfasst.

## Claims

1. Gas chromatograph having a miniaturised chromatograph module (30) which is arranged in a housing (G), preferably a housing of portable construction, and which has a support plate (33) and, arranged thereon, an injector (34), a separating column (35), which is provided with a heater, and a detector (36) as well as various capillaries (38-41) for connecting those functional parts and for supplying and discharging carrier gas and sample gas, wherein there is provided on the support plate (33) a connection block (31) for connecting carrier gas and sample gas supply and discharge lines that are external to the module to the capillaries (38-41), and wherein there is further located on the support plate (33) a microprocessor-based electronic circuit (37) for controlling the injector (34) and the heater of the separating column (35), for processing and optionally analysing the measurement signals generated by the detector (36) and for communicating with a computer (60) external to the module, **characterised in that** in the housing (G) there are additionally arranged a carrier gas container (12), a carrier gas pressure-reducing valve (20), a first sample gas pressure-reducing valve (18), an electrically controllable first sample gas valve (23), a first sample gas inlet port (1) and an outlet port (4) for carrier gas and sample gas as well as a computer (60) having a monitor (10), wherein the carrier gas container (12), the first sample gas inlet port (1), the first sample gas valve (23) and the outlet port (4) are connected to the corresponding supply and discharge capillaries (38-41) of the chromatograph module (30), with the carrier gas container (12) being connected thereto via the carrier gas pressure-reducing valve (20), the first sample gas inlet port (1) via the first sample gas pressure-reducing valve (18) and the first sample gas valve (23) and the outlet port (4) in each case via the connection block (31), and wherein a manifold (22) is provided, which manifold is sealingly detachably connected to the connection block (31) of the chromatograph module (30) and via which manifold all lines leading to and from the chromatograph module (30) that are external to the module are connected to the chromatograph module, and wherein the first sample gas valve (23) is arranged inside the manifold (22), and wherein, furthermore, the computer (60) is configured for communicating with the chromatograph module (30) and for controlling the latter as well as for analysing and displaying and optionally storing the measured values generated by the chromatograph module (30).

2. Gas chromatograph according to claim 1, **characterised in that** the first sample gas valve (23) is in the form of a two-way solenoid valve having one inlet and two outlets, wherein the inlet is connected to the first sample gas pressure-reducing valve (18) and one outlet is connected via the connection block (31) to the sample gas supply capillary (40) of the chromatograph module (30) and the other outlet is connected to the outlet port (4) for carrier gas and sample gas, and wherein the first sample gas valve (23) is controllable by the computer (60).

3. Gas chromatograph according to either one of the preceding claims, **characterised in that** a sample gas pump (21) controlled by the computer (60) is provided between the first sample gas inlet port (1) and the first sample gas pressure-reducing valve (18), the suction side of which sample gas pump is connected to the first sample gas inlet port (1).

4. Gas chromatograph according to any one of the preceding claims, **characterised in that** a second sample gas valve (24), a second sample gas pressure-reducing valve (19) and a second sample gas inlet port (2) are provided in the housing (G), wherein the second sample gas valve (24) is connected on the inlet side via the second sample gas pressure-reducing valve (19) to the second sample gas inlet port (2) and on the outlet side via the connection block (31) to the sample gas supply capillary (40) of the chromatograph module (30).

5. Gas chromatograph according to claim 4, **characterised in that** the second sample gas valve (24) is in the form of a two-way solenoid valve having one inlet and two outlets, wherein the inlet is connected to the second sample gas pressure-reducing valve (19) and one outlet is connected via the connection block (31) to the sample gas supply capillary (40) of the chromatograph module (30) and the other outlet is connected to the outlet port (4) for carrier gas and sample gas, and wherein the second sample gas valve (24) is controllable by the computer (60).

6. Gas chromatograph according to claim 4 or 5, **characterised in that** the second sample gas valve (24) is arranged inside the manifold (22).

7. Gas chromatograph according to any one of the preceding claims, **characterised in that** the manifold (22) is sealed with respect to the connection block (31) by means of O-rings (242).

8. Gas chromatograph according to any one of the preceding claims, **characterised in that** in the manifold (22) microfilters (225) are arranged in the lines leading to the chromatograph module (30).

9. Gas chromatograph according to any one of the preceding claims, **characterised in that** in the housing (G) a carrier gas inlet port (5) is provided and is connected via a non-return valve (17) to the carrier gas pressure-reducing valve (20) on the input side, and the carrier gas container (12) is likewise connected to the carrier gas pressure-reducing valve (20) via a non-return valve (15).

10. Gas chromatograph according to any one of the preceding claims, **characterised in that** the carrier gas container (12) is provided with a shut-off valve (14) and a manometer (16).

11. Gas chromatograph according to any one of the preceding claims, **characterised in that** the carrier gas container (12) in the full state has a relatively low internal pressure of about 10-12 bar.

12. Gas chromatograph according to any one of the preceding claims, **characterised in that** the carrier gas container (12) has a volume of a maximum of about 100 ml.

13. Gas chromatograph according to any one of the preceding claims, **characterised in that** the carrier gas container (12) is of refillable construction.

14. Gas chromatograph according to any one of the preceding claims, **characterised in that** in the housing (G) there is provided a cooling device (50) for the separating column (35) of the chromatograph module (30), which cooling device is controlled by the computer (60).

15. Gas chromatograph according to claim 14, **characterised in that** the cooling device (50) has a substantially closed cooling housing (51) which engages over the separating column (35) and in which there are arranged air circulation means (52) and a Peltier element (54) which is controlled by the computer (60), and wherein, furthermore, heat dissipation means (56) for the Peltier element are provided outside of the cooling housing (51).

16. Gas chromatograph according to any one of the preceding claims, **characterised in that** the monitor (10) of the computer (60) is of touch-sensitive construction, the computer being configured to display buttons on the monitor, the tapping of which buttons enables programmed functions to be initiated.

17. Gas chromatograph according to any one of the preceding claims, **characterised in that** the housing (G) is equipped with an interface (7) for connection of a keyboard and/or of some other input device for the computer (60).

18. Gas chromatograph according to any one of the preceding claims, **characterised in that** a power supply (71, 72) is provided in the housing (G), which power supply comprises rechargeable batteries and a power adapter for connection to the AC network or to a low-voltage DC source.

## Revendications

1. Chromatographe en phase gazeuse comportant un module de chromatographe miniaturisé (30) qui est agencé dans un boîtier (G) réalisé de préférence portable et qui comprend une plaque de support (33) et un injecteur (34) agencé sur celle-ci, une colonne de séparation (35) pourvue d'un chauffage et un détecteur (36) ainsi que divers capillaires (38 - 41) destinés à relier ces éléments fonctionnels et à alimenter et à évacuer un gaz porteur et un gaz échantillon, dans lequel
un bloc de raccordement (31) pour raccorder aux capillaires (38 - 41) des conduites d'alimentation et d'évacuation de gaz porteur et de gaz échantillon externes au module est prévu sur la plaque de support (33), et
en outre un circuit électronique (37) à base de microprocesseur se situe sur la plaque de support (33) pour commander l'injecteur (34) et le chauffage de la colonne de séparation (35), pour traiter et le cas échéant évaluer les signaux de mesure générés par le détecteur (36) et pour communiquer avec un calculateur (60) externe au module, **caractérisé en ce que**
dans le boîtier (G) sont prévus en supplément un récipient à gaz porteur (12), une vanne (20) de réduction de pression du gaz porteur, une première vanne (18) de réduction de pression de gaz échantillon, une première vanne à gaz échantillon (23) à commande électrique, un premier raccord d'entrée de gaz échantillon (1) et un raccord de sortie (4) pour le gaz porteur et pour le gaz échantillon, ainsi qu'un calculateur (60) pourvu d'un moniteur (10),
le récipient à gaz porteur (12) est relié aux capillaires d'alimentation et d'évacuation correspondants (38-41) du module de chromatographe (30) par la vanne (20) de réduction de pression de gaz porteur, le premier raccord d'entrée de gaz échantillon (1) est relié auxdites capillaires par la première vanne (18) de réduction de pression de gaz échantillon, et la première vanne à gaz échantillon (23) et le raccord de sortie (4) sont reliés auxdites capillaires chacun par le bloc de raccordement (31), et
il est prévu un collecteur (22) relié de façon étanche et amovible au bloc de raccordement (31) du module de chromatographe (30), collecteur par lequel toutes les conduites externes au module menant vers le module de chromatographe (30) et en éloignement de celui-ci sont raccordées au module de chromatographe, et
la première vanne à gaz échantillon (23) est agencée à l'intérieur du collecteur (22), et en outre
le calculateur (60) est réalisé pour la communication avec le module de chromatographe (30) et pour sa commande ainsi que pour l'évaluation et l'affichage et le cas échéant la mémorisation des valeurs de mesure générées par le module de chromatographe (30).

2. Chromatographe en phase gazeuse selon la revendication 1, **caractérisé en ce que**
la première vanne à gaz échantillon (23) est réalisée sous la forme d'une vanne magnétique à deux voies présentant une entrée et deux sorties,
l'entrée est raccordée à la première vanne (18) de réduction de pression de gaz échantillon, et
une sortie est reliée au capillaire d'alimentation de gaz échantillon (40) du module de chromatographe (30) par le bloc de raccordement (31), et
l'autre sortie est reliée au raccord de sortie (4) pour le gaz porteur et le gaz échantillon,
la première vanne à gaz échantillon (23) est pilotable par le calculateur (60).

3. Chromatographe en phase gazeuse selon l'une des revendications précédentes,
**caractérisé en ce que**
entre le premier raccord d'entrée de gaz échantillon (1) et la première vanne (18) de réduction de pression de gaz échantillon, il est prévu une pompe à gaz échantillon (21) commandée par le calculateur (60), pompe dont le côté aspiration est relié au premier raccord d'entrée de gaz échantillon (1).

4. Chromatographe en phase gazeuse selon l'une des revendications précédentes,
**caractérisé en ce que**
dans le boîtier (G) sont prévus une seconde vanne à gaz échantillon (24), une seconde vanne (19) de réduction de pression de gaz échantillon et un second raccord d'entrée de gaz échantillon (2),
la seconde vanne à gaz échantillon (24) est reliée du côté entrée au second raccord d'entrée de gaz échantillon (2) par la seconde vanne (19) de réduction de pression de gaz échantillon et du côté sortie au capillaire d'alimentation de gaz échantillon (40) du module de chromatographe (30) par le bloc de raccordement (31).

5. Chromatographe en phase gazeuse selon la revendication 4, **caractérisé en ce que**
la seconde vanne à gaz échantillon (24) est réalisée sous la forme d'une vanne magnétique à deux voies présentant une entrée et deux sorties,
l'entrée est raccordée à la seconde vanne (19) de réduction de pression de gaz échantillon, et
une sortie est reliée au capillaire d'alimentation de gaz échantillon (40) du module de chromatographe (30) par le bloc de raccordement (31), et
l'autre sortie est reliée au raccord de sortie (4) pour le gaz porteur et le gaz échantillon,
la seconde vanne à gaz échantillon (24) est pilotable par le calculateur (60).

6. Chromatographe en phase gazeuse selon la revendication 4 ou 5,
**caractérisé en ce que**
la seconde vanne à gaz échantillon (24) est agencée à l'intérieur du collecteur (22).

7. Chromatographe en phase gazeuse selon l'une des revendications précédentes,
**caractérisé en ce que**
le collecteur (22) est étanché par rapport au bloc de raccordement (31) au moyen de joints toriques (242).

8. Chromatographe en phase gazeuse selon l'une des revendications précédentes,
**caractérisé en ce que**
dans le collecteur, des micro-filtres (225) sont agencés dans les conduites menant vers le module de chromatographe (30).

9. Chromatographe en phase gazeuse selon l'une des revendications précédentes,
**caractérisé en ce que**
un raccord d'entrée de gaz porteur (5) est prévu dans le boîtier (G) et est relié du côté entrée à la vanne (20) de réduction de pression de gaz porteur via un clapet anti-retour (17), et **en ce que**
le récipient à gaz porteur (12) est également relié à la vanne (20) de réduction de pression de gaz porteur par un clapet anti-retour (15).

10. Chromatographe en phase gazeuse selon l'une des revendications précédentes,
**caractérisé en ce que**
le récipient à gaz porteur (12) est pourvu d'une vanne d'arrêt (14) et d'un manomètre (16).

11. Chromatographe en phase gazeuse selon l'une des revendications précédentes,
**caractérisé en ce que**
dans l'état plein, le récipient à gaz porteur (12) présente une pression intérieure relativement faible d'environ 10 à 12 bars.

12. Chromatographe en phase gazeuse selon l'une des revendications précédentes,
**caractérisé en ce que**
le récipient à gaz porteur (12) présente un volume maximal d'environ 100 ml.

13. Chromatographe en phase gazeuse selon l'une des revendications précédentes,
**caractérisé en ce que**
le récipient à gaz porteur (12) est réalisé de façon ré-remplissable.

14. Chromatographe en phase gazeuse selon l'une des revendications précédentes,
**caractérisé en ce que**
dans le boîtier (G) est prévu un moyen de refroidissement (50) commandé par le calculateur (60) et destiné à la colonne de séparation (35) du module de chromatographe (30).

15. Chromatographe en phase gazeuse selon la revendication 14,
**caractérisé en ce que**
le moyen de refroidissement (50) comprend un boîtier de refroidissement (51) sensiblement fermé qui coiffe la colonne de séparation (35) et dans lequel sont agencés des moyens de circulation d'air (52) et un élément de Peltier (54) commandé par le calculateur (60), et de plus
des moyens de dissipation de chaleur (56) sont prévus à l'extérieur du boîtier de refroidissement (51) pour l'élément de Peltier.

16. Chromatographe en phase gazeuse selon l'une des revendications précédentes,
**caractérisé en ce que**
le moniteur (10) du calculateur (60) est réalisé de façon tactile,
le calculateur est réalisé pour représenter des surfaces de commutation sur le moniteur, permettant de déclencher des fonctions programmées en tapant sur lesdites surfaces.

17. Chromatographe en phase gazeuse selon l'une des revendications précédentes,
**caractérisé en ce que**
le boîtier (G) est équipé d'une interface (7) pour raccorder un clavier et/ou un autre appareil d'entrée pour le calculateur (60).

18. Chromatographe en phase gazeuse selon l'une des revendications précédentes,
**caractérisé en ce que**
une alimentation électrique (71, 72) est prévue dans le boîtier (G), qui comprend des accumulateurs et un bloc d'alimentation pour la connexion au réseau à courant alternatif ou à une source de courant continu à faible tension.
